# EUROPEAN PATENT APPLICATION

(11) **EP 4 019 613 A1**
(43) Date of publication of application: **29.06.2022**
(21) Application number: 21218019.4
(22) Date of filing: 28.12.2021
(51) Int. Cl.: C10M 169/04, C10N 20/04, C10N 30/00, C10N 30/02, C10N 30/08, C10N 40/02

(54) **FLUID BEARING LUBRICATING OIL, FLUID BEARING, MOTOR, AND BLOWER**

(30) Priority: 28.12.2020 JP 2020219558
(71) Applicant: Nidec Corporation, Minami-ku Kyoto 601-8205 (JP)
(72) Inventor: KAWAHARA, Yuki, Kyoto 601-8205 (JP)
(74) Representative: Zimmermann, Tankred Klaus

(57) **Abstract**

In the fluid bearing lubricating oil, a viscosity index improver containing polymethacrylate is added to an ester oil-based base oil.

## Description

### Technical Field

The present disclosure relates to a fluid bearing lubricating oil, a fluid bearing, a motor, and a blower.

### Background Art

A conventional fluid bearing lubricating oil is disclosed in Patent Literature 1. This fluid bearing lubricating oil is filled between the shaft and the sleeve of a fluid bearing. The fluid bearing is used as a bearing of a motor. Dynamic pressure is generated in the fluid bearing lubricating oil with rotation of the motor, and contact between the shaft and the sleeve is prevented. This causes the sleeve to rotate smoothly with respect to the shaft (see JP 2006-96849 A, for example).

However, according to the conventional fluid bearing lubricating oil described above, the fluid bearing is downsized and thinned along with the downsizing of the motor, and the rigidity of the fluid bearing decreases. Therefore, there has been a problem that swing of the shaft occurs with respect to the sleeve.

### Summary of Invention

A fluid bearing lubricating oil according to an exemplary embodiment of the present disclosure is a fluid bearing lubricating oil for a fluid bearing, in which a viscosity index improver containing polymethacrylate is added to an ester oil-based base oil.

The above and other elements, features, steps, characteristics and advantages of the present disclosure will become more apparent from the following detailed description of the preferred embodiments with reference to the attached drawings.

### Brief Description of Drawings

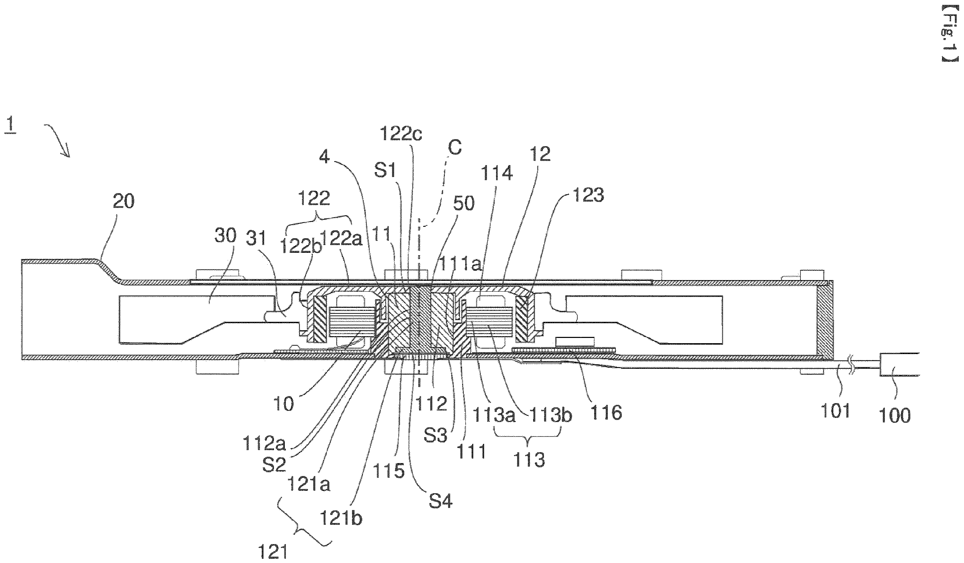

Fig. 1 is a longitudinal sectional view of a blower according to an embodiment of the present invention.

### Description of Embodiments

An exemplary embodiment of the present disclosure will be described in detail with reference to the drawings. In this description, an upper side in a center axis direction of a motor is referred to as an "upper side", and a lower side in the center axis direction of the motor is referred to as a "lower side". The vertical direction does not indicate a positional relationship or a direction at the time of being incorporated in actual equipment. A direction parallel or substantially parallel to the center axis is referred to as an "axial direction (axial/axially)", a radial direction about the center axis is referred to as a "radial direction (radial/radially)", and a circumferential direction about the center axis is referred to as a "circumferential direction (circumferential/circumferentially)".

A blower according to an exemplary embodiment of the present disclosure will be described below. Fig. 1 is a longitudinal sectional view of a blower 1 according to a first embodiment. The blower 1 includes a housing 20, an impeller 30, and a motor 10, and the impeller 30 and the motor 10 are accommodated in an internal space of the housing 20.

The motor 10 is disposed radially inside the impeller 30 and rotates the impeller 30 about a center axis C. The motor 10 includes a stationary portion 11 and a rotating portion 12. The stationary portion 11 is fixed to the housing 20. The rotating portion 12 is rotatably supported with respect to the stationary portion 11 about the center axis C via a fluid bearing lubricating oil 50 (hereinafter, abbreviated as lubricating oil). A part of the stationary portion 11 and a part of the rotating portion 12 constitute a fluid bearing 4.

The stationary portion 11 has a support member 111, a sleeve portion 112, a stator core 113, a coil 114, and a thrust member 115.

The support member 111 fixes the stator core 113. The support member 111 is formed in a substantially cylindrical shape protruding in the axial direction, in the center part of which a support through hole 111a is formed along the center axis C. The support member 111 is formed of a metal material such as aluminum, and is fixed to the bottom part of the housing 20. Note that the support member 111 and the housing 20 may be separated, or may be integrally formed with a single member.

The stator core 113 has a core back 113a and teeth 113b. The core back 113a is annular and is fitted to the outer peripheral surface of the support member 111. The core back 113a includes a plurality of electromagnetic steel sheets stacked in the axial direction, for example. The plurality of teeth 113b extend to radially outward from the core back 113a.

The coil 114 is formed of a conductive wire wound around each of the teeth 113b. The coil 114 is connected to a lead wire 101 via a circuit board 116. A connector 100 is coupled to a leading end of the lead wire 101. The connector 100 is connected to a power supply device (not illustrated). When a power supply voltage is applied from the power supply device (not illustrated) to the lead wire 101, a magnetic flux in the radial direction is generated in the teeth 113b.

The sleeve portion 112 is formed in a substantially cylindrical shape extending in the axial direction, in the center part of which a sleeve through hole 112a is formed along the center axis C. The sleeve portion 112 is disposed in the support through hole 111a and is fixed via, for example, an adhesive. A shaft portion 121 of the rotating portion 12 described later is disposed in the sleeve through hole 112a.

The thrust member 115 is a disk-shaped member that is disposed axially below the shaft portion 121 and blocks a lower end portion of the sleeve through hole 112a. The thrust member 115 is bonded and fixed to the lower end portion of the sleeve through hole 112a via, for example, an adhesive.

The rotating portion 12 includes the shaft portion 121, a rotor hub portion 122, and a magnet 123.

The shaft portion 121 is disposed inside the sleeve through hole 112a. The shaft portion 121 is formed of a separate member from the rotor hub portion 122, for example. Note that the shaft portion 121 and the rotor hub portion 122 may be a single member.

The shaft portion 121 includes a shaft body portion 121a and a shaft flange portion 121b, and is formed in a T shape in a longitudinal cross-sectional view. The shaft body portion 121a extends in a columnar shape along the center axis C. The shaft flange portion 121b is formed in an annular shape protruding radially outward from the lower end portion of the shaft body portion 121a.

The rotor hub portion 122 extends annularly around the shaft portion 121. The rotor hub portion 122 has a hub annular portion 122a and a hub peripheral wall portion 122b. The hub annular portion 122a and the hub peripheral wall portion 122b are integrally formed.

The hub annular portion 122a has a hub through hole 122c on the center axis C, and an upper end portion of the shaft portion 121 is press-fitted and fixed to the hub through hole 122c. The hub annular portion 122a extends radially outward from the hub through hole 122c and is formed in a disk shape. A radially outer end portion of the hub annular portion 122a is located radially outward relative to the stator core 113. The hub peripheral wall portion 122b is formed in a cylindrical shape and extends axially downward from the radially outer end portion of the hub annular portion 122a. The impeller 30 is fixed to the hub peripheral wall portion 122b via a coupling portion 31.

The magnet 123 is annular and is fixed to the inner peripheral surface of the hub peripheral wall portion 122b. An inner peripheral surface of the magnet 123 radially opposes the radially outer end surface of the teeth 113b across a gap. A north pole and a south pole are alternately magnetized in the circumferential direction on the inner peripheral surface of the magnet 123. In place of the annular magnet 123, a plurality of magnets may be arrayed in the circumferential direction.

The hub annular portion 122a and the sleeve portion 112 axially oppose each other across a minute gap S1. The shaft body portion 121a and the sleeve portion 112 radially oppose each other across a minute gap S2. The upper surface of the shaft flange portion 121b and the lower surface of the sleeve portion 112 axially oppose each other across a minute gap S3. The shaft flange portion 121b and the thrust member 115 oppose each other across a minute gap S4. The minute gaps S1, S2, S3, and S4 communicate with one another, and are filled with the lubricating oil 50.

When the motor 10 supplies a drive current to the coil 114, a magnetic flux is generated in the coil 114. Then, due to the action of the magnetic flux between the coil 114 and the magnet 123, a circumferential torque is generated between the stationary portion 11 and the rotating portion 12. Due to this, the rotation portion 12 rotates about the center axis C with respect to the stationary portion 11. As a result, the impeller 30 rotates about the center axis C together with the rotating portion 12.

The fluid bearing 4 includes the shaft portion 121, the hub annular portion 122a, the sleeve portion 112, the thrust member 115, and the lubricating oil 50. As mentioned above, the shaft portion 121 and the hub annular portion 122a are a part of the rotating portion 12, and the sleeve portion 112 and the thrust member 115 are a part of the stationary portion 11.

A dynamic pressure groove (not illustrated) is formed on at least one of the surfaces opposing each other across the minute gaps S1, S2, S3, and S4. When the rotating portion 12 rotates with respect to the stationary portion 11, the dynamic pressure groove induces the fluid dynamic pressure in the lubricating oil 50 filled in the minute gaps S1, S2, S3, and S4 by the pumping action. Due to this, the shaft portion 121 and the hub annular portion 122a are supported radially and axially in a non-contact manner with the sleeve portion 112 and the thrust member 115, and can smoothly rotate at a high speed.

In the lubricating oil 50, a viscosity index improver containing polymethacrylate is added to an ester oil-based base oil. As the ester oil as the main component of the base oil, for example, monoester, diester, triester, polyol ester, and complex ester are suitably used. The ester oil-based base oil is excellent in abrasion resistance, thermal stability, and fluidity, and thus is suitable as the lubricating oil 50 of the fluid bearing 4.

As the diester, for example, an ester of octyl alcohol and dimer acid is suitably used. The ester of octyl alcohol and dimer acid is high in kinematic viscosity at a high temperature.

The polyol ester is an ester of a polyhydric alcohol and a saturated fatty acid, or an ester of a polyhydric alcohol and an unsaturated fatty acid. Specific examples of the polyol ester include hexamethylene glycol, neopentyl glycol, decamethylene glycol, pentaerythritol, dipentaerythritol, trimethylolethane, and trimethylolpropane.

The carbon number of the saturated fatty acid and the unsaturated fatty acid forming the polyol ester is preferably equal to or greater than 5 and equal to or less than 20. Specific examples of the saturated fatty acid and the unsaturated fatty acid include pentanoic acid, caproic acid, caprylic acid, capric acid, lauric acid, myristic acid, palmitic acid, stearic acid, and eicosanoic acid.

Examples of the complex ester include an oligomer ester in which a polyvalent fatty acid is added to a polyol ester as a raw material and the polyol is cross-linked.

The polyol ester and the complex ester can be suitably used in high-temperature applications. The polyol ester is lower in cost than the complex ester. The more the number of ester groups increases, the higher the viscosity of the polyol ester becomes, and the less the polyol ester becomes likely to evaporate. Therefore, the viscosity increases in order of the monoester, the diester, and the triester, and the lubricating oil 50 using a triester-based base oil can reduce the occurrence of swinging as compared with the lubricating oil 50 using a monoester-based or diester-based base oil.

As the lubricating oil 50, one type of ester oil may be used as a main component, or a mixture of different types of ester oils may be used as a main component. A mixture of one type or two or more types of other synthetic oils (e.g., poly-α-olefin) with an ester oil as a main component may be used as the base oil.

In the lubricating oil 50, a viscosity index improver containing polymethacrylate is added to an ester oil-based base oil. Addition of a viscosity index improver containing polymethacrylate causes the polymethacrylate dissolved in the base oil to function as a buffer in the minute gaps S1, S2, S3, and S4. This makes it possible to reduce swinging occurring between the shaft portion 121 and the sleeve portion 112. That is, it is possible to provide the lubricating oil 50 that can reduce the occurrence of swinging.

The lubricating oil 50 to which the viscosity index improver is added has a kinematic viscosity at 40°C of equal to or greater than 10 mm²/S and equal to or less than 45 mm²/S. By making the kinematic viscosity at 40°C equal to or greater than 10 mm²/S, it is possible to cause the rotating portion 12 to smoothly rotate with respect to the stationary portion 11. More preferably, the lubricating oil 50 has a kinematic viscosity at 40°C of equal to or greater than 20 mm²/S. By making the kinematic viscosity at 40°C equal to or greater than 20 mm²/S, it is possible to cause the rotating portion 12 to more smoothly rotate with respect to the stationary portion 11. By making the kinematic viscosity at 40°C equal to or less than 45 mm²/S, the fluidity of the lubricating oil 50 is improved, and it is possible to reduce energy loss due to viscous friction and to reduce power consumption of the motor 10.

The viscosity index improver is added in an amount of equal to or greater than 2 wt% and equal to or less than 10 wt% with respect to an ester oil-based base oil. When the viscosity index improver is added in an amount of less than 2 wt% to the base oil, the amount of dissolution of polymethacrylate is small, and the function as a buffer material is deteriorated. When the viscosity index improver is added in an amount of more than 10 wt% to the base oil, the added polymethacrylate is saturated, and becomes less likely to be dissolved in the base oil.

The viscosity index improver is more preferably added in an amount of equal to or greater than 2 wt% and equal to or less than 5 wt% with respect to an ester oil-based base oil. By adding the viscosity index improver in an amount of equal to or less than 5 wt% with respect to the base oil, the fluidity of the lubricating oil 50 is reduced, and it is possible to reduce energy loss due to viscous friction.

The viscosity index improver preferably contains polymethacrylate having a molecular weight of equal to or greater than 350,000 and equal to or less than 500,000. Polymethacrylate having a molecular weight of equal to or greater than 350,000 has a high function as a buffer, and can reduce more the occurrence of swinging. Polymethacrylate having a molecular weight of greater than 500,000 is likely to be sheared, and the function as a buffer is likely to deteriorate with long-term use. The viscosity index improver more preferably contains polymethacrylate having a molecular weight of equal to or less than 420,000. Polymethacrylate having a molecular weight of less than 420,000 is less likely to be sheared, and the function as a buffer is less likely to deteriorate with long-term use.

The polymethacrylate is represented by the following formula (1). In the formula (1), R is a straight-chain or branched-chain alkyl group. n is an integer of equal to or greater than 2.

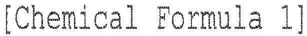

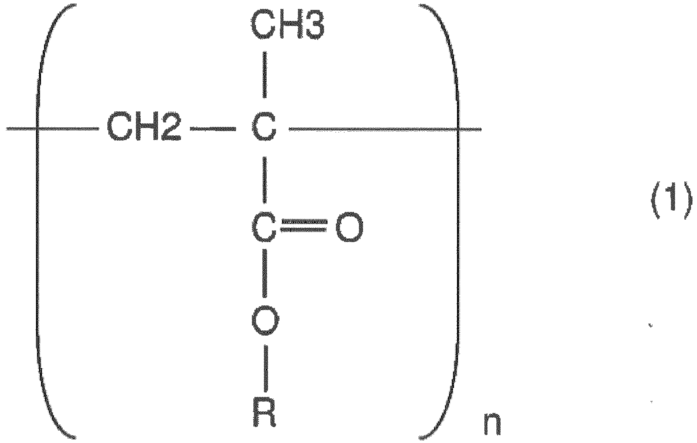

R is preferably a straight-chain or branched-chain alkyl group with 1 to 24 carbons. Furthermore, based on the relationship among the crystallization temperature of polymethacrylate, the solubility into the base oil, and the viscosity, R is more preferably a straight-chain alkyl group with 1 or 4 carbons or a branched-chain alkyl group with 12 to 24 carbons.

The polymethacrylate may be a copolymer composed of one type of constituent monomer or a copolymer composed of two or more types of constituent monomers. The polymethacrylate polymer may contain another radical polymerizable monomer as a constituent unit.

Examples of the radical polymerizable monomer include a hydroxyl group-containing vinyl monomer, an amide group-containing monomer, a nitro group-containing monomer, an amino group-containing monomer, a nitrile group-containing monomer, a phosphorus atom-containing monomer, an aliphatic hydrocarbon-based monomer, an alicyclic hydrocarbon-based monomer, an aromatic hydrocarbon-based monomer, a vinyl ester monomer, a vinyl ketone monomer, an epoxy group-containing monomer, a halogen element-containing monomer, and an unsaturated polycarboxylic acid ester monomer.

In the amino group-containing monomer, in the formula (1), R is an alkyl group containing an amino group. The amino group functions as a metal adsorption group. That is, the polymethacrylate has a metal adsorption group such as an amino group. By having the metal adsorption group, the polymethacrylate dissolved in the base oil is easily adsorbed to the shaft portion 121 or the sleeve portion 112 that are made of metal in the minute gaps S1, S2, S3, and S4. This improves the function of the polymethacrylate as a buffer. In the formula (1), even when R is an alkyl group containing a carboxyl group or a hydroxyl group as a metal adsorption group other than an amino group, the same effect can be obtained.

In the lubricating oil 50, an antioxidant and an anti-hydrolysis are further added to the above-described ester oil-based base oil.

By further adding the antioxidant to the base oil, it is possible to reduce oxidation degradation of the lubricating oil 50. Specific examples of the antioxidant include a phenol-based antioxidant, an amine-based antioxidant, and a sulfur-based antioxidant. Among them, the phenol-based antioxidant and the amine-based antioxidant are more preferable. A plurality of different types of antioxidants may be added.

By further adding the anti-hydrolysis to the base oil, it is possible to reduce deterioration of the lubricating oil 50 due to hydrolysis. Specific examples of the anti-hydrolysis include a carbodiimide compound.

The lubricating oil 50 can be appropriately mixed with, in addition to the above-described additives, at least one type of additives such as a metal cleaner, an ashless dispersant, an oily agent, an antiwear agent, an extreme pressure agent, a metal deactivator, an antirust agent, a viscosity index improver, and a pour point depressant.

The effects of the present disclosure will be specifically described using Examples and Comparative Examples. In the following experiment, swing resistance of the lubricating oil 50 was evaluated.

In all the lubricating oils according to Example 1, Example 2, Comparative Example 1, and Comparative Example 2, trimethylolpropane was used as a base oil.

The lubricating oil 50 of Example 1 is added with 2 mass% viscosity index improver containing polymethacrylate having a molecular weight of equal to or greater than 350,000. At this time, the lubricating oil 50 has a kinematic viscosity at 40°C of 27.8 mm²/S, and an antioxidant and an anti-hydrolysis are added thereto. The polymethacrylate contained in the viscosity index improver has an amino group as a metal adsorption group.

The lubricating oil 50 of Example 2 is added with 5 mass% viscosity index improver containing polymethacrylate having a molecular weight of equal to or greater than 350,000. At this time, the lubricating oil 50 has a kinematic viscosity at 40°C of 40.8 mm²/S, and an antioxidant and an anti-hydrolysis are added thereto. The polymethacrylate contained in the viscosity index improver has an amino group as a metal adsorption group.

The lubricating oil 50 of Comparative Example 1 is not added with a viscosity index improver containing polymethacrylate. The lubricating oil 50 has a kinematic viscosity at 40°C of 20.4 mm²/S, and an antioxidant and an anti-hydrolysis are added thereto. The base oil excluding the viscosity index improver and the additive formulation are the same as those in Examples 1 and 2.

The lubricating oil 50 of Comparative Example 2 is added with 2 mass% viscosity index improver containing polymethacrylate having a molecular weight of equal to or greater than 200,000 and less than 350,000. At this time, the lubricating oil 50 has a kinematic viscosity at 40°C of 25.4 mm²/S, and an antioxidant and an anti-hydrolysis are added thereto. The polymethacrylate contained in the viscosity index improver does not have an amino group as a metal adsorption group.

The lubricating oil 50 of each of Example 1, Example 2, Comparative Example 1, and Comparative Example 2 was filled in the fluid bearing 4, and the impeller 30 was rotated at a rotation speed of 2000 rpm. In a state where the impeller 30 was rotated, the environmental temperature was raised, and the blower 1 was rotated about two axes orthogonal to the center axis C to find presence of generation of abnormal noise.

In Example 1, the generation of abnormal noise was found for the first time in a temperature environment of 80°C. In Example 2, the generation of abnormal noise was found for the first time in a temperature environment of 60°C. In Comparative Example 1, the generation of abnormal noise was found for the first time in a temperature environment of 55°C. In Comparative Example 2, the generation of abnormal noise was found for the first time in a temperature environment of 55°C. Thus, it was found that the lubricating oil 50 of Examples 1 and 2 was excellent in swing resistance.

While an embodiment of the present disclosure has been described, the present disclosure is not limited to the present embodiment. For example, the type of the fluid bearing 4 is not limited, and a conical type or thrust type fluid bearing 4 may be applied.

In the present embodiment, a shaft rotating type outer rotor type motor has been described. However, the present invention can also be applied to a shaft fixing type motor and an inner rotor type motor.

Features of the above-described preferred embodiments and the modifications thereof may be combined appropriately as long as no conflict arises.

While preferred embodiments of the present disclosure have been described above, it is to be understood that variations and modifications will be apparent to those skilled in the art without departing from the scope and spirit of the present disclosure. The scope of the present disclosure, therefore, is to be determined solely by the following claims.

## Claims

1. A fluid bearing lubricating oil (50) **characterized in that** a viscosity index improver containing polymethacrylate is added to an ester oil-based base oil.

2. The fluid bearing lubricating oil (50) according to claim 1, **characterized in that** the base oil is monoester-based.

3. The fluid bearing lubricating oil (50) according to claim 1, **characterized in that** the base oil is diester-based.

4. The fluid bearing lubricating oil (50) according to claim 1, **characterized in that** the base oil is triester-based.

5. The fluid bearing lubricating oil (50) according to any of claims 1 to 4, **characterized in that** the viscosity index improver contains polymethacrylate having a molecular weight of equal to or greater than 350,000.

6. The fluid bearing lubricating oil (50) according to any of claims 1 to 5, **characterized in that** the viscosity index improver contains polymethacrylate having a molecular weight of equal to or less than 500,000.

7. The fluid bearing lubricating oil (50) according to any of claims 1 to 6, **characterized in that** the viscosity index improver contains polymethacrylate having a metal adsorption group.

8. The fluid bearing lubricating oil (50) according to claim 7, **characterized in that** the metal adsorption group is an amino group.

9. The fluid bearing lubricating oil (50) according to any of claims 1 to 8, **characterized in that** the viscosity index improver is added in an amount of equal to or greater than 2 wt% and equal to or less than 10 wt% with respect to the base oil.

10. The fluid bearing lubricating oil (50) according to any of claims 1 to 8, **characterized in that** the viscosity index improver is added in an amount of equal to or greater than 2 wt% and equal to or less than 5 wt% with respect to the base oil.

11. The fluid bearing lubricating oil (50) according to any of claims 1 to 10, **characterized in that** a kinematic viscosity at 40°C is equal to or greater than 10 mm²/S and equal to or less than 45 mm²/S.

12. The fluid bearing lubricating oil (50) according to any of claims 1 to 11, **characterized in that** an antioxidant is further added to the base oil.

13. The fluid bearing lubricating oil (50) according to any of claims 1 to 12, **characterized in that** an anti-hydrolysis is further added to the base oil.

14. A fluid bearing (4) **characterized in that** the fluid bearing lubricating oil (50) according to any of claims 1 to 13 is filled.

15. A motor (10) comprising the fluid bearing (4) according to claim 14.
